# EUROPÄISCHE PATENTSCHRIFT

(11) **EP 3 558 777 B1**
(45) Veröffentlichungstag und Bekanntmachung des Hinweises auf die Patenterteilung: **07.10.2020**
(21) Anmeldenummer: 17837963.2
(22) Anmeldetag: 20.12.2017
(51) Int. Cl.: B60W 30/18, B60W 50/00, B60W 10/02, B60W 10/06, B60W 10/08

(54) **VERFAHREN ZUM BETRIEB EINES KRAFTFAHRZEUGS MIT VORZEITIGEM MOTORNEUSTART AUS DEM ENGINE-OFF-COASTING**
METHOD FOR OPERATING A MOTOR VEHICLE WITH AN EARLY MOTOR RESTART OUT OF THE ENGINE-OFF COASTING MODE
PROCÉDÉ PERMETTANT DE FAIRE FONCTIONNER UN VÉHICULE AUTOMOBILE À L'AIDE D'UN REDÉMARRAGE DU MOTEUR ANTICIPÉ À PARTIR D'UNE MARCHE EN ROUE LIVRE AVEC MOTEUR ARRÊTÉ

(30) Priorität: 22.12.2016 DE 102016225932
(43) Veröffentlichungstag der Anmeldung: 30.10.2019
(73) Patentinhaber: Vitesco Technologies GmbH, 30165 Hannover (DE)
(72) Erfinder: HAMPERL, Helmut, 93413 Cham (DE); WANKERL, Lisa, 93173 Wenzenbach (DE)
(74) Vertreter: Waldmann, Georg Alexander
(86) Internationale Anmeldenummer: PCT/EP2017/083940
(87) Internationale Veröffentlichungsnummer: WO 2018/115195

(56) Entgegenhaltungen:
- WO-A1-2016/152723
- DE-A1- 10 221 701
- DE-A1-102016 100 299
- DE-T5-112013 002 811
- US-A1- 2016 264 140

## Beschreibung

Um Kraftstoff zu sparen und umweltschädliche Emissionen zu reduzieren bieten moderne Fahrzeuge den Betriebszustand Engine-Off-Coasting an. Dabei rollt das Fahrzeug in einem vorgegebenen Bereich um eine gewählte Geschwindigkeit, während der Verbrennungsmotor aus ist und vom Getriebe abgekoppelt ist. Sofern keine Bergabfahrten in diesem Zustand durchgeführt werden, wird das Fahrzeug dabei normalerweise langsamer. Wenn eine untere Grenze des Geschwindigkeitsbereichs erreicht wird, wird der Verbrennungsmotor vorzugsweise automatisch neu gestartet und wieder beschleunigt.

In bestimmten Situationen in diesem Fahrbetriebsmodus sind Abbremsvorgänge nötig, in denen jedoch eine schnelle Wiederbeschleunigung gewünscht wird. Eine solche Situation könnte beispielsweise sein, dass sich ein Fahrzeug auf der Autobahn einem langsameren vorausfahrenden Fahrzeug nähert. Wenn momentan kein Überholvorgang möglich ist, muss der Fahrer das Fahrzeug zunächst abbremsen um dann für einen Überholvorgang schnell wieder zu beschleunigen. Das Signal für die Wiederbeschleunigung wird in der Regel durch Betätigen des Gaspedals durch den Fahrer ausgelöst. Aus dem Engine-Off-Modus ist die Beschleunigungs-leistung des Verbrennungsmotors jedoch erst dann vollständig abrufbar, wenn der Verbrennungsmotor seine Mindestdrehzahl erreicht hat. Die Verzögerung bis der Motor diese Mindestdrehzahl erreicht hat, liegt üblicherweise bei bis zu 1500 ms. Diese Verzögerung wird von Fahrern oftmals als unangenehm wahrgenommen.

Ein Segel-Betriebsmodus wird beispielsweise in der DE 102 21 701 A1 beschrieben. Dabei ist ein Motor während eines Segelbetriebszustandes von der Antriebswelle eines Getriebes durch eine geöffnete Kupplung abgekuppelt und ggf. abgeschaltet. Bei Betätigung der Bremse oder eines Kraftstoffzufuhrbemessungsglieds wird der Segelmodus beendet.

Der Erfindung liegt daher die Aufgabe zugrunde, ein Verfahren anzugeben mit welchem die Motorstartzeit aus dem Engine-Off-Coasting verkürzt werden kann.

Die Aufgabe wird gelöst durch den Gegenstand der unabhängigen Ansprüche. Vorteilhafte Weiterbildungen sind in den abhängigen Ansprüchen und in der nachfolgenden Beschreibung angegeben.

Die Erfindung sieht ein Verfahren zum Betrieb eines Kraftfahrzeugs vor, wobei das Kraftfahrzeug mindestens einen Verbrennungsmotor mit einer Kurbelwelle aufweist, sowie einen Antriebsstrang, welcher mittels einer lösbaren Kupplung vom Verbrennungsmotor getrennt werden kann. Der Antriebsstrang weist beispielsweise ein Getriebe und eine Welle zur Übertragung des Drehmoments auf.

In einem ersten möglichen Betriebszustand bewegt sich das Fahrzeug in einem vorgegebenen Bereich um eine Geschwindigkeit v. Der Verbrennungsmotor ist dabei aus und durch die lösbare Kupplung vom Antriebsstrang getrennt. Erfindungsgemäß wird im Falle eines Bremsvorgangs in diesem ersten möglichen Betriebszustand eine Prognose durchgeführt, ob innerhalb eines vorgegebenen Zeitintervalls eine Leistungsanforderung zu erwarten ist. Falls eine Leistungsanforderung innerhalb des vorgegebenen Zeitintervalls zu erwarten ist, wird zur Vorbereitung eines Motorneustarts die Kurbelwelle des Verbrennungsmotors in Rotation versetzt oder die Drehzahl der Kurbelwelle erhöht.

Das erfindungsgemäße Verfahren kann angewendet werden in Fahrzeugen mit einem herkömmlichen Antriebsstrang mit Verbrennungsmotor, z.B. mit einem elektrischen Starter oder Startergenerator oder auch in Hybridfahrzeugen mit einem Antriebselektromotor.

Der erste mögliche Betriebszustand des Fahrzeugs entspricht einem Engine-Off-Coasting. Das Fahrzeug bewegt sich mit einer Geschwindigkeit in einem vorgegebenen Bereich um eine gewählte Geschwindigkeit v. Die gewählte Geschwindigkeit ist vorzugsweise ungleich Null und vorzugsweise größer als ein vorgegebener Geschwindigkeitsschwellwert, z.B. größer als 5 km/h oder 10 km/h. Insbesondere ist der Zustand des Enginge-Off-Coastings aber bei höheren Geschwindigkeiten auf der Autobahn oder einer Landstraße relevant. Der vorgegebene Geschwindigkeitsbereich ist beispielsweise ein Intervall mit einem Betrag von 5 km/h oder 10 km/h um die gewählte Geschwindigkeit v und wird im folgenden auch als "Coasting Intervall" bezeichnet. In dem ersten möglichen Betriebszustand werden Geschwindigkeitsschwankungen des Fahrzeugs innerhalb dieses Coasting Intervalls zugelassen.

Wenn nun in diesem Zustand ein Bremsvorgang (z.B. durch Betätigen des Bremspedals) stattfindet, wird erfindungsgemäß eine Prognose durchgeführt, ob eine Leistungsanforderung innerhalb eines vorgegebenen Zeitfensters zu erwarten ist. Eine Leistungsanforderung kann beispielsweise für eine Wiederbeschleunigung notwendig sein. Das vorgegebene Zeitfenster bzw. Zeitintervall ist vorzugsweise nicht größer als als 10s, besonders bevorzugt nicht größer als 5 oder 3 Sekunden oder sogar kleiner oder gleich 1 Sekunde.

Wenn eine Leistungsanforderung innerhalb dieses Zeitfensters zu erwarten ist, d.h. wenn die Prognose positiv ausfällt, wird erfindungsgemäß die Kurbelwelle des Verbrennungsmotors vorsorglich in Rotation versetzt bzw. die Drehzahl der Kurbelwelle wird erhöht. Vorzugsweise wird die Drehzahl der Kurbelwelle mindestens auf eine Leerlaufdrehzahl des Verbrennungsmotors bis maximal zur Motordrehzahl bei maximaler Leistung erhöht. Dies geschieht erfindungsgemäß bereits bevor der Fahrer eine tatsächliches Signal für eine Leistungsanforderung gibt, z.B. durch Betätigen des Gaspedals.

Durch dieses vorbereitende "Hochdrehen" des Verbrennungsmotors kann die Startzeit des Verbrennungsmotors bei einer Leistungsanforderung durch den Fahrer erheblich (beispielsweise um 800 ms) verringert werden.

Die Prognose, ob nach einem Bremsvorgang, eine rasche Leistungsanforderung zu erwarten ist, wird vorzugsweise auf Grundlage von momentanen Zustandsdaten des Antriebsstrangs und/oder Informationen einer Fahrzeugsensorik und/oder Fahrereingaben und/oder Streckeninformationen durchgeführt. Grundsätzlich können alle verfügbaren Informationen über den Zustand des Fahrzeugs und dessen Umgebung für die Prognose genutzt werden. Verfügbare Informationen können aus Steuerungen und Sensoren des Fahrzeugs, per Datenübertragung aus dem Internet, Backend, von Infrastruktursystemen oder von anderen Fahrzeugen erhalten werden.

Momentane Zustandsdaten des Verbrennungsmotors können beispielsweise eine Fahrzeuggeschwindigkeit, Drehzahlen von Getriebe, Elektromotor und/oder Verbrennungsmotor sowie Motortemperaturen sein. Fahrereingaben sind beispielsweise das Betätigungen des Gas- und oder Bremspedals, Kraft und Geschwindigkeit, mit welcher die Pedale betätigt werden, oder das Setzen eines Blinkers.

Informationen einer Fahrzeugsensorik sind Informationen von im Fahrzeug befindlichen Sensoren, die den Zustand des Fahrzeugs noch weiter spezifizieren können. Beispiele sind Abstandssensoren oder Kameras, die beispielsweise vorausfahrende oder benachbarte Fahrzeuge erfassen können.

Streckeninformationen umfassen dynamische oder statische digitale Karten, beispielsweise von einem Navigationssystem, insbesondere, wenn ein Ziel eingeben und eine Route berechnet wurde, Infrastrukturdaten beispielsweise von Ampel- oder Verkehrsleitsystemen, Informationen über vorausfahrende Fahrzeuge, Verkehrsinformationen, Informationen über Überholspuren, Geländeinformationen und dergleichen. Insbesondere bei den Streckeninformationen sind neben im Fahrzeug gespeicherten Daten auch Daten aus anderen Quellen interessant.

In bestimmten Situationen ist ein vorzeitiges Hochdrehen des Verbrennungsmotors unerwünscht. Dies kann beispielsweise eine Notbremsung sein, wobei der Bremsvorgang durch das Hochdrehen des Motors verlangsamt werden könnte. Daher ist die Prognose, ob innerhalb eines vorgegebenen Zeitintervalls eine Leistungsanforderung zu erwarten ist, vorzugsweise negativ, wenn mindestens ein vorgegebenes Ausschlusskriterium vorliegt. Ein vorgegebenes Ausschlusskriterium kann dabei sein, dass eine Notbremsung festgestellt wird oder dass die Fahrzeuggeschwindigkeit kleiner gleich einer Schwellgeschwindigkeit beträgt, die zum Beispiel 5 km/h betragen kann. Eine Notbremsung kann anhand von Daten eines Antiblockiersystems im Fahrzeug oder aufgrund des Drucks und der Geschwindigkeit, mit welcher ein Bremspedal getreten wird, erkannt werden.

Die Prognose, ob innerhalb eines vorgegebenen Zeitintervalls eine Leistungsanforderung zu erwarten ist, fällt vorzugsweise positiv aus, wenn eine auf Grundlage der vorher genannten Informationen berechnete Wahrscheinlichkeit für eine Leistungsanforderung innerhalb des vorgegebenen Zeitintervalls einen vorgegebenen Wahrscheinlichkeitsschwellwert übersteigt. Vorzugsweise ist jedoch für die Prognose keine vollständige Berechnung der Wahrscheinlichkeit notwendig. Vielmehr dienen vorzugsweise bestimmte Kombinationen aus einzelnen der oben genannten Informationen und das Nichtvorliegen von Ausschlusskriterien ein Indikator für eine bevorstehende Leistungsanforderung.

Ein Beispiel für eine Kombination von Informationen bzw. Prüfungskriterien aufgrund derer die Prognose durchgeführt wird, sind: "Prüfung, ob die untere Geschwindigkeitslevel des Coasting Intervalls unterschritten wurde, Prüfung, ob eine hohe Bremsverzögerung vorhanden ist, so dass in weniger als 500 ms der untere Geschwindigkeitslevel erreicht wird oder die Drehzahl auf der Getriebeeingangsseite kleiner als 100 U/min erreicht wird, Ist ein Spurwechsel vorgesehen? Ist ein Blinker gesetzt? Soll abgebogen werden? Wie hoch ist die Motortemperatur?"

Wenn eine Leistungsanforderung innerhalb des vorgegebenen Zeitintervalls zu erwarten ist, wird erfindungsgemäß die Kurbelwelle des Verbrennungsmotors in Rotation versetzt oder deren Drehzahl erhöht. Je nach Architektur des Antriebsstrangs kann dies auf unterschiedliche Weisen erfolgen. Bei einer P0 oder P2 Architektur ist eine Kupplung zwischen Verbrennungsmotor mit Kurbelwelle auf der einen Seite und Getriebe und ggf. einem Elektromotor auf der anderen Seite angeordnet. D.h. der Verbrennungsmotor mit Kurbelwelle kann durch diese Kupplung von Getriebe (und ggf. Elektromotor) und deren Wellen getrennt werden. Bei geschlossener Kupplung ist eine Drehmomentübertragung in beide Richtungen möglich.

Eine Reibkupplung ermöglicht ein sogenanntes "Kupplungsschleifen", bei welchem die Kupplung in einem definierten und kontrollierten Prozess zumindest teilweise geschlossen wird. Dabei werden die Drehzahlen der auf beiden Seiten der Kupplung angrenzenden Wellen synchronisiert. Gemäß einer bevorzugten Ausführungsvariante ist die Kupplung eine Reibkupplung und die Kurbelwelle des Verbrennungsmotors wird in Rotation versetzt oder ihre Drehzahl wird erhöht, indem die Kupplung zur Übertragung eines Drehmoments von der Welle auf die Kurbelwelle zumindest teilweise geschlossen wird. Bei Getriebedrehzahlen, die größer als die Leerlaufdrehzahlen und kleiner als die maximale Drehzahl des Motors sind, kann durch Kupplungsschleifen die Motordrehzahl bis zur Getriebedrehzahl angetrieben werden. Durch das Hochdrehen des Motors aus dem Stillstand durch vorzeitiges fast vollständiges Einkuppeln kann die Mindestdrehzahl des Motors erreicht werden. Durch gezielte Einspritzung wird dann die gewünschte Motordrehzahl erreicht. Die Zeit bis zum nächsten gewünschten Beschleunigen wird um die Zeit verkürzt, die der Motor vorzeitig (ggf. bereits während des Bremsens) eingekuppelt und auf Mindestdrehzahl hochgedreht wird (z.B. ca. 300 bis 800 ms)

Gemäß einer anderen vorteilhaften Variante des erfindungsgemäßen Verfahrens kann die Kurbelwelle des Verbrennungsmotors mithilfe eines Elektromotors angetrieben werden. Der Elektromotor kann ein Antriebselektromotor sein, wie in einem Hybridfahrzeug, oder auch ein Starter oder ein Startergenerator, wie z.B. bei einer P1 oder P0 Architektur. Bei einer P1 oder P0 Architektur ist der Elektromotor nicht direkt mit dem Antriebsstrang und dem Getriebe verbunden sondern vorzugsweise durch mindestens eine lösbare Kupplung vom Antriebsstrang trennbar. Durch das Starten des Motors aus dem Stillstand durch das Starten des Starters oder Startergenerators kann die Mindestdrehzahl des Motors erreicht. Durch gezielte Einspritzung wird dann die gewünschte Motordrehzahl erreicht. Die Zeit bis zum nächsten gewünschten Beschleunigen wird um die Zeit verkürzt, die der Motor vorzeitig (ggf. bereits während des Bremsens)gestartet und auf Mindestdrehzahl hochgedreht wird (z.B. ca. 250 bis 400 ms).

Darüber hinaus ist noch eine Variante möglich, bei welcher der Motor aus dem Stillstand durch das Starten des Starters bei gleichzeitiger höherer Generatorleistung und leicht erhöhter Boardnetzspannung hochgedreht wird. Die mögliche Zeitverkürzung beträgt hier beispielsweise ca. 300 bis 500 ms.

Die maximale Drehzahl auf welche der Verbrennungsmotor vorbereitend hochgedreht wird kann abhängig sein von der gewünschten Bremsleistung und kürzestem Wiederbeschleunigen sein, jedoch nicht höher als die Drehzahl bei maximaler Leistung.

Das erfindungsgemäße Verfahren wird vorzugsweise als automatisch gesteuerte Funktion einer Steuervorrichtung im Fahrzeug ausgeführt. Ein unabhängiger Gegenstand der Erfindung ist daher eine Steuervorrichtung für ein Kraftfahrzeug, wobei die Steuervorrichtung eine Prozessorvorrichtung aufweist, die dazu eingerichtet ist, eine Ausführungsvariante des erfindungsgemäßen Verfahrens durchzuführen.

Die Steuervorrichtung weist vorzugsweise eine Motorsteuerung für den Verbrennungsmotor sowie eine Steuerung zur Betätigung der Kupplung auf. Vorzugsweise weist die Steuervorrichtung auch eine Motorsteuerung für einen Elektromotor auf.

Ein weiterer Gegenstand der Erfindung ist ein Kraftfahrzeug mit einem Verbrennungsmotor mit einer Kurbelwelle, sowie mit einem Antriebsstrang, der mittels einer lösbaren Kupplung vom Verbrennungsmotor getrennt werden kann, und einer erfindungsmäßen Steuervorrichtung.

Im Folgenden soll die Erfindung anhand der Figuren beispielhaft weiter erläutert werden. Es zeigen schematisch:
Fig.1: Ein Geschwindigkeitsprofil eines Fahrzeugs im Betriebsmodus Engine-Off-Coasting mit je einem Bremsvorgang mit und ohne Ausführung des erfindungsgemäßen Verfahrens;
Fig. 2: ein Flußdiagramm zur Veranschaulichung des Betriebszustands Engine-Off-Coasting;
Fig. 3: ein Flußdiagramm zur Veranschaulichung des Ablaufs des erfindungsgemäßen Verfahrens gemäß einer Ausführungsvariante;
Fig. 4: ein Flußdiagramm zur veranschaulichung des Betriebszustands Idle-Coasting; und
Fig. 5: ein erfindungsgemäßes Kraftfahrzeug mit einer erfindungsgemäßen Steuervorrichtung.

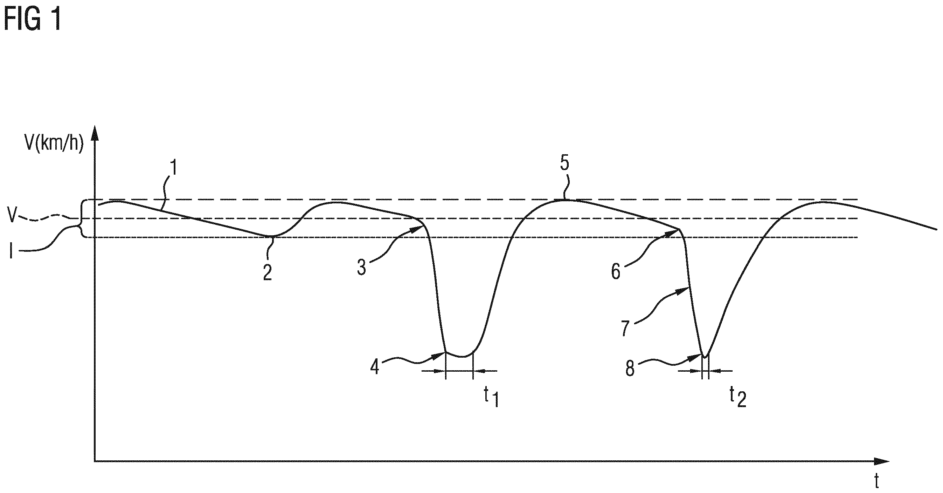

In Figur 1 ist die Geschwindigkeit V eines Fahrzeuges gegen die Zeit t aufgetragen. Das Fahrzeug befindet sich im Engine Off-Coasting-Modus beispielsweise auf einer Autobahn. Zu Beginn bewegt sich das Fahrzeug mit einer Geschwindigkeit am oberen Rand eines Intervalls I um eine gewählte Geschwindigkeit v. Im Betriebsmodus des Engine-Off-Coastings wird hier der Verbrennungsmotor ausgeschaltet und der Verbrennungsmotor durch Öffnen der Kupplung vom Antriebsstrang getrennt. Anschließend fährt das Fahrzeug mit abnehmender Geschwindigkeit, bis es im Punkt 2 den unteren Bereich des Intervalls I (Coasting Intervall) erreicht. Hier wird der Verbrennungsmotor durch eine Steuerung automatisch wieder gestartet und das Fahrzeug wieder beschleunigt, bis es wieder den oberen Bereich des Coasting Intervalls erreicht. Der Verbrennungsmotor wird wieder ausgeschaltet und im normalen Coasting Betrieb wiederholt sich der beschriebene Vorgang.

Wenn nun aber zum Zeitpunkt 3 ein starkes Bremsen erfolgt, beispielsweise weil ein vorausfahrendes Fahrzeug langsamer fährt und kein Überholvorgang möglich ist, verlässt das Fahrzeug das Coasting Intervall I. Zum Zeitpunkt 4 möchte der Fahrer überholen, weil die Überholspur nun frei ist, und möchte beschleunigen. Der Verbrennungsmotor wird gestartet. Da der Verbrennungsmotor aus war, dauert es eine Zeitspanne t₁ bis der Verbrennungsmotor die volle Beschleunigungsleistung liefern kann. Das Fahrzeug erreicht zum Zeitpunkt 5 wieder den oberen Rand des Intervalls I um die Geschwindigkeit v. Der Engine-Off-Coasting Betrieb kann fortgesetzt werden.

Im Folgenden wird der beschriebene Vorgang mit Durchführung des erfindungsgemäßen Verfahrens gezeigt. Erneut erfolgt aus dem Engine-Off-Coasting Betrieb ein starkes Bremsen zum Zeitpunkt 6. Anhand einer Prognose wird eine hohe Wahrscheinlichkeit für eine Leistungsanforderung erkannt und der Verbrennungsmotor bereits während des Abbremsens 7 hochgedreht, bzw. dessen Kurbelwelle in Rotation versetzt oder dessen Drehzahl erhöht. Zum Zeitpunkt 8 erfolgt vom Fahrer ein Signal zur Beschleunigung. Die Zeitspanne bis der Verbrennungsmotor seine volle Beschleunigungsleistung erbringen kann, ist verkürzt auf die Zeitspanne t₂. Das Fahrzeug wird wieder beschleunigt und kann beispielsweise wieder den Engine-Off-Coasting Modus fortsetzen.

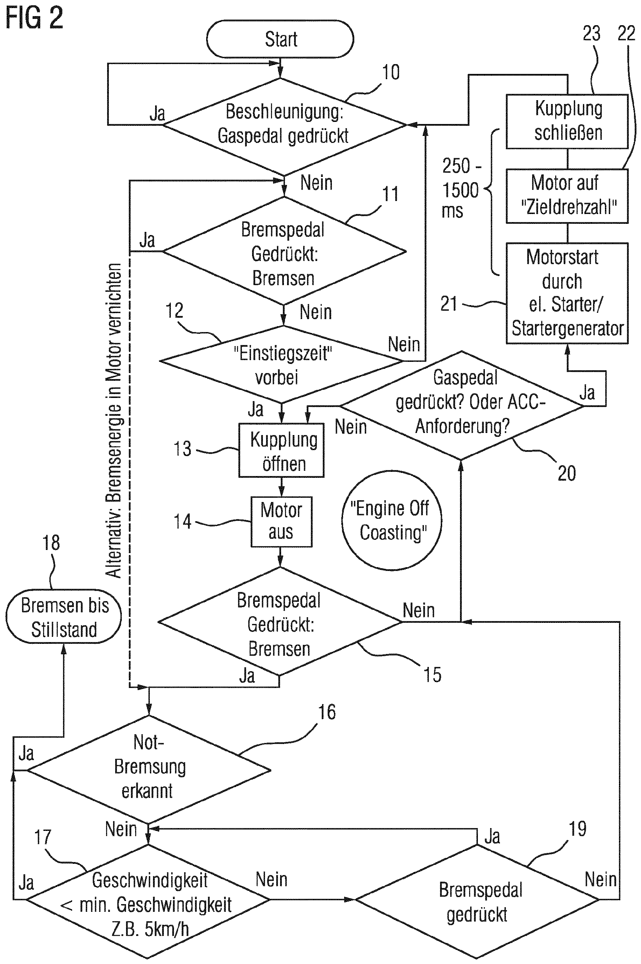

Figur 2 zeigt ein Flußdiagramm zur Veranschaulichung des bekannten Engine-Off Coastings gemäß dem Stand der Technik. Vor dem Eintreten in den Engine-Off-Modus muss das Fahrzeug erst einmal auf die gewünschte Geschwindigkeit beschleunigt werden. Deswegen ist bei Start des Flußdiagramm der Verbrennungsmotor an und die Kupplung geschlossen. Im Schritt 10 ("Beschleunigung/Gaspedal gedrückt?")wird geprüft, ob das Gaspedal gedrückt ist. Solange im Schritt 10 das Gaspedal des Fahrzeugs gedrückt ist, wird weiter beschleunigt. Wenn das Gaspedal nicht gedrückt ist, wird in Schritt 11 ("Bremsen/Bremspedal gedrückt?") überprüft, ob das Bremspedal gedrückt ist. Falls das Bremspedal gedrückt ist, wird der Schritt wiederholt. Alternativ kann Bremsenergie im Motor vernichtet werden und anschließend in Schritt 16 ("Notbremsung erkannt?") überprüft werden, ob eine Notbremsung vorliegt, oder ob in Schritt 17 (Geschwindigkeit < min. Geschwindigkeit z.B. 5 km/h?") eine niedrige Geschwindigkeit z.B. kleiner als 5 km/h festgestellt wird. Falls eines der beiden vorliegt, wird das Fahrzeug weiter abgebremst ggf. bis zum Stillstand (Schritt 18, "Bremsen bis Stillstand").

Falls in Schritt 11 jedoch das Bremspedal nicht gedrückt ist, wird in Schritt 12 ("Einstiegszeit vorbei?") abgefragt, ob eine gewisse vorgegebene Einstiegszeit abgelaufen ist. Dies kann als eine Voraussetzung für den Eintritt in den automatischen Engine-Off-Modus vorgegeben sein. Falls die Eintrittszeit nicht abgelaufen ist, werden die Schritte 10 und 11 wiederholt und überprüft, ob das Gaspedal oder das Bremspedal gedrückt sind. Falls beides nicht der Fall ist, und in Schritt 12 festgestellt wird, dass die Einstiegszeit vorbei ist, wird in Schritt 13 ("Kupplung öffnen") die Kupplung geöffnet und in Schritt 14 ("Verbrennungsmotor aus") der Verbrennungsmotor ausgeschaltet. Hiermit wird der eigentliche Engine-Off-Modus gestartet.

In Schritt 15 ("Bremspedal gedrückt?") wird überprüft, ob das Bremspedal gedrückt ist. Falls ja, wird wieder in Schritt 16 überprüft, ob eine Notbremsung vorliegt. Falls das Bremspedal nicht gedrückt ist, wird in Schritt 20 ("Gaspedal gedrückt oder ACC-Anforderung?") überprüft, ob das Gaspedal gedrückt ist, oder ob eine Leistungsanforderung gegeben ist. In diesem Fall wird in Schritt 21 ("Motorstart durch el. Starter oder Startergenerator"), der Verbrennungsmotor gestartet z.B. durch einen elektrischen Starter oder Startergenerator. Sobald in Schritt 22 ("Motor auf Zieldrehzahl?") festgestellt wird, dass der Verbrennungsmotor seine Zieldrehzahl erreicht hat, wird in Schritt 23 ("Kupplung schließen") die Kupplung geschlossen. Anschließend kann das Verfahren mit Schritt 10 erneut durchlaufen werden.

Wenn aber weder in Schritt 15 das Bremspedal gedrückt ist noch in Schritt 20 eine Leistungsanforderung z.B. durch das Gaspedal erfolgt, bleibt das Fahrzeug im Engine-Off-Modus bei geöffneter Kupplung (Schritt 13) und abgeschaltetem Verbrennungsmotor (Schritt 14) bis entweder eine Beschleunigungs- oder eine Bremsanforderung erfolgt.

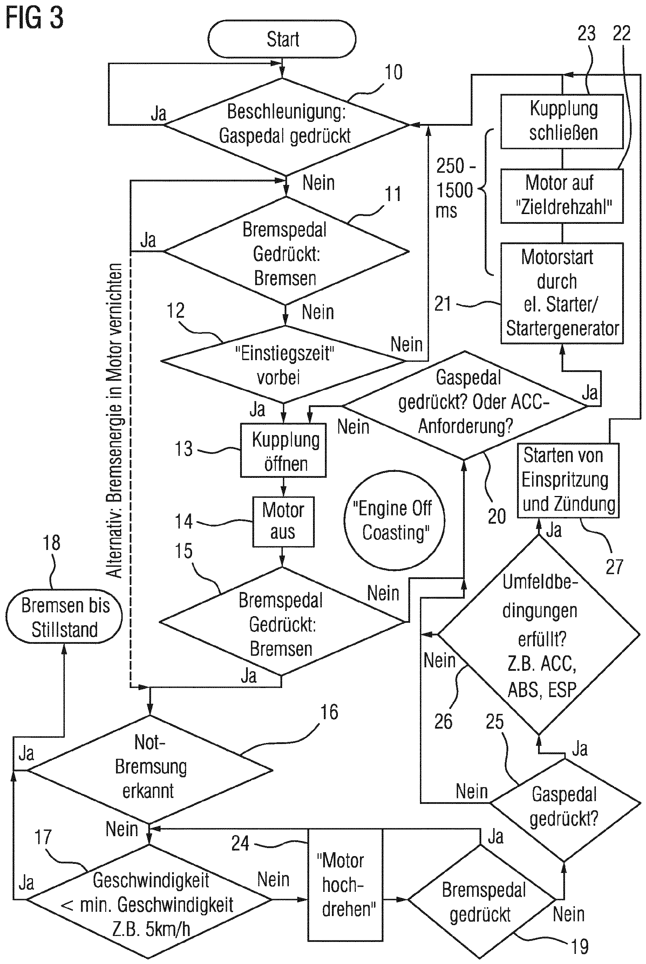

Figur 3 zeigt nun in einem Flußdiagramm die Durchführung des erfindungsgemäßen Verfahrens. Das in Figur 3 gezeigte Verfahren geht ebenfalls von dem in Figur 2 gezeigten Engine-Off-Betrieb aus. Für dieselben Schritte werden daher dieselben Bezugszeichen verwendet und es wird auf die Beschreibung zu Figur 2 verwiesen. Das erfindungsgemäße Verfahren startet in Schritt 15, in dem sich das Fahrzeug bereit im Engine-Off- Modus befindet und in Schritt 15 eine Bremsanforderung festgestellt wird. Erfindungsgemäß wird eine Prognose erstellt, ob eine Leistungsanforderung innerhalb eines vorgegebenen Zeitintervalls zu erwarten ist. Hierfür wird in Schritt 16 überprüft, ob eine Notbremsung vorliegt. Falls ja, ist dies ein Ausschlusskriterium und das erfindungsgemäße Verfahren ist beendet. Das Fahrzeug kann ganz normal in Schritt 18 bis zum Stillstand abgebremst werden.

Falls keine Notbremsung erkannt wird, aber in Schritt 17 eine geringe Geschwindigkeit von unter 5 km/h festgestellt wird, ist die Prognose für die Wahrscheinlichkeit einer Leistungsanforderung ebenfalls negativ. Das erfindungsgemäße Verfahren ist ebenfalls beendet und es kann in Schritt 18 ebenso bis zum Stillstand abgebremst werden.

Falls die Prognose jedoch ergibt, dass eine Leistungsanforderung zu erwarten ist, wird in Schritt 24 ("Motor hochdrehen") die Kurbelwelle des Verbrennungsmotors in Rotation versetzt, bzw. deren Drehzahl erhöht. Dies erfolgt je nach Antriebsstrangarchitektur mittels kontrolliertem Kupplungsschleifen, bei einer P0 oder P2 Architektur oder mithilfe eines Elektromotors z.B. eines Startergenerators bei einer P0 oder P1 Architektur. Bei kontrolliertem Kupplungsschleifen, d.h. zumindest teilweisem Schließen der Reibkupplung kann der Verbrennungsmotor auf diese Weise bis hin zur Getriebedrehzahl "hochgedreht" werden, wenn die Getriebedrehzahl größer als die Leerlaufdrehzahl des Motors und kleiner als die Motordrehzahl bei maximaler Leistung ist.

Währenddessen oder anschließend wird in Schritt 19 ("Bremspedal gedrückt?") überprüft, ob weiterhin das Bremspedal gedrückt ist. Falls ja, wird erneut in Schritt 17 geprüft, ob eine Mindestgeschwindigkeit von 5 km/h unterschritten wird.

Falls das Bremspedal in Schritt 19 nicht mehr gedrückt ist, wird in Schritt 25 ("Gaspedal gedrückt") überprüft, ob eine Leistungsanforderung vorliegt bzw. ob das Gaspedal gedrückt ist. Wenn dies nicht der Fall ist, wird wieder in den Engine-Off-Modus gewechselt. Falls aber das Gaspedal gedrückt ist, wird in Schritt 26 ("Umfeldbedingungen erfüllt? ACC, ABS, ESP,...") noch geprüft, ob weitere Umfeldbedingungen erfüllt sind, z.B. hinsichtlich ACC, ABS, ESP oder anderen, und in Schritt 27 ("Starten von Zündung und Einspritzung") wird schließlich die Zündung und Einspritzung des Verbrennungsmotors gestartet.

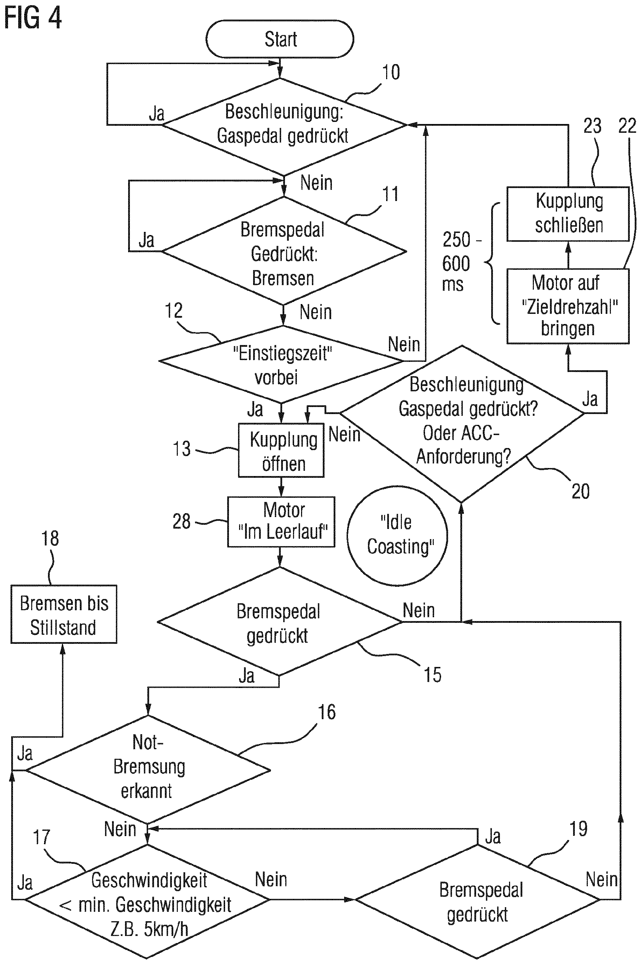

Figur 4 zeigt zum Vergleich den Betriebsmodus des Idle-Coasting, bei welchem der Verbrennungsmotor im Leerlaufbetrieb läuft und ausgekuppelt ist. Gleiche Schritte sind mit gleichen Bezugszeichen versehen, wie in Figur 2. An Schritt 13 "Kupplung Öffnen" schließt hier der Schritt 28 "Verbrennungsmotor im Leerlauf schalten" an. Der Motor wird hier, im Unterschied zum Engine-Off-Coasting also nicht abgeschaltet. Wenn nun aus dem Idle-Coasting in Schritt 20 eine Beschleunigung erwünscht wird bzw. eine Leistungsanforderung beispielsweise durch die Klimaanlage erfolgt, entfällt der Schritt des Motorstartens und der Verbrennungsmotor kann direkt in Schritt 22 auf die Zieldrehzahl gebracht werden. Der Vorgang ab der Leistungsanforderung bis zum Kupplung Schließen mit der Zieldrehzahl dauert übelicherweise zwischen 250 und 600 ms. Im Vergleich dazu dauert es aus dem in Figur 2 gezeigten Engine-Off-Coasting gemäß dem Stand der Technik 250 bis 1500ms, bis die Zieldrehzahl erreicht ist und die Kupplung geschlossen werden kann. Mit dem erfindungsgemäßen Verfahren gemäß Figur 3 kann die Zeit des Neustarts aus dem Engine-Off Coasting auf ca. 250 bis 800 ms verkürzt werden.

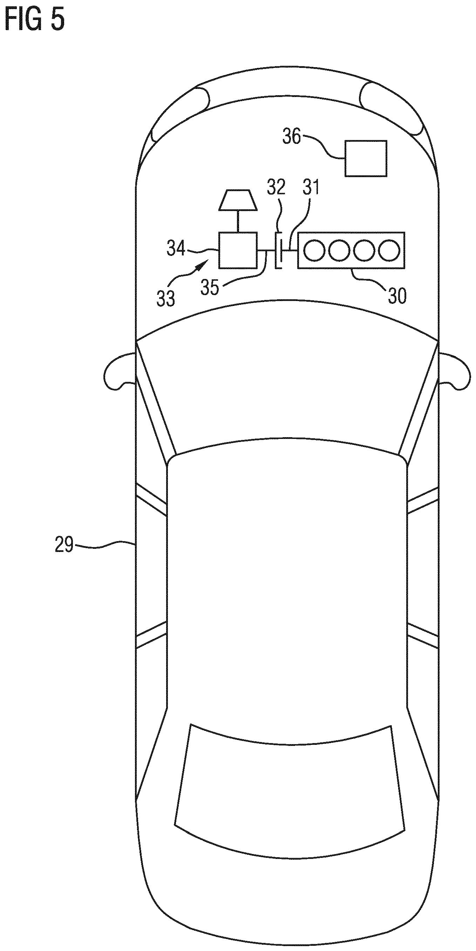

Figur 5 zeigt ein erfindungsgemäßes Kraftfahrzeug 29 mit einem Verbrennungsmotor 30 mit einer Kurbelwelle, die mittels einer lösbaren Kupplung 32 von einem Antriebsstrang 33 mit einem Getriebe 34 und einer Welle 35 getrennt werden können. Eine Steuervorrichtung 36 ist eingerichtet, ein erfindungsgemäßes Verfahren in dem Kraftfahrzeug 29 durchzuführen.

Die obige Darstellung der Erfindung ist lediglich beispielhaft. Sämtliche in der Beschreibung und den Ansprüchen offenbarten Aspekte der Erfindung können sowohl einzeln als auch in Kombination in der Erfindung zum Einsatz kommen.

## Patentansprüche

1. Verfahren zum Betrieb eines Kraftfahrzeugs (29)
mit mindestens einem Verbrennungsmotor (30) mit einer Kurbelwelle, sowie mit einem Antriebsstrang (33) der mittels einer lösbaren Kupplung (32) vom Verbrennungsmotor (30) getrennt werden kann,
wobei sich das Fahrzeug (29) in einem ersten möglichen Betriebszustand in einem vorgegebenen Bereich um eine Geschwindigkeit (v) bewegt, während der Verbrennungsmotor (30) aus ist und durch die lösbare Kupplung (32) vom Antriebsstrang (33) getrennt ist;
**dadurch gekennzeichnet,**
**dass** im Falle eines Bremsvorgangs in diesem ersten Betriebszustand, eine Prognose durchgeführt wird, ob innerhalb eines vorgegebenen Zeitintervalls eine Leistungsanforderung zu erwarten ist, und falls dies zutrifft, zur Vorbereitung eines Motorneustarts die Kurbelwelle des Verbrennungsmotors (30) in Rotation versetzt wird oder eine Drehzahl der Kurbelwelle erhöht wird.

2. Verfahren zum Betrieb eines Kraftfahrzeugs (29) gemäß Anspruch 1, wobei die Prognose, ob innerhalb eines vorgegebenen Zeitintervalls eine Leistungsanforderung zu erwarten ist, auf Grundlage von momentanen Zustandsdaten des Antriebsstrangs (33) und/oder Fahrereingaben und/oder Informationen von Fahrzeugsensoren und/oder Streckeninformationen durchgeführt wird.

3. Verfahren zum Betrieb eines Kraftfahrzeugs (29) gemäß einem der vorhergehenden Ansprüche, wobei die Prognose, ob innerhalb eines vorgegebenen Zeitintervalls eine Leistungsanforderung zu erwarten ist, negativ ausfällt, wenn mindestens ein vorgegebenes Ausschlusskriterium vorliegt.

4. Verfahren zum Betrieb eines Kraftfahrzeugs (29) gemäß einem der vorhergehenden Ansprüche, wobei innerhalb des vorgegebenen Zeitintervalls eine Leistungsanforderung zu erwarten ist, wenn eine auf Grundlage von momentanen Zustandsdaten des Antriebsstrangs (33) und/oder Informationen über Fahrereingaben und/oder Informationen einer Fahrzeugsensorik und/oder Streckeninformationen ermittelte Wahrscheinlichkeit für eine Leistungsanforderung innerhalb des vorgegebenen Zeitintervalls einen vorgegebenen Wahrscheinlichkeitsschwellwert übersteigt.

5. Verfahren zum Betrieb eines Kraftfahrzeugs (29) gemäß einem der vorhergehenden Ansprüche,
wobei die Kupplung (32) eine Reibkupplung ist, und die Kurbelwelle des Verbrennungsmotors (30) in Rotation versetzt wird oder ihre Drehzahl erhöht wird, indem die Kupplung (32) zur Übertragung eines Drehmoments von der Welle auf die Kurbelwelle mittels Reibung zumindest teilweise geschlossen wird.

6. Verfahren zum Betrieb eines Kraftfahrzeugs (29) gemäß einem der Ansprüche 1 bis 4,
wobei die Kurbelwelle des Verbrennungsmotors (30) mit Hilfe eines Elektromotors in Rotation versetzt wird bzw. deren Drehzahl erhöht wird.

7. Verfahren zum Betrieb eines Kraftfahrzeugs (29) gemäß einem der vorhergehenden Ansprüche, wobei der Elektromotor durch mindestens eine lösbare Kupplung (32) vom Antriebsstrang (33) trennbar ist.

8. Steuervorrichtung (36) für ein Kraftfahrzeug (29), wobei die Steuervorrichtung (36) eine Prozessorvorrichtung aufweist, die dazu eingerichtet ist, ein Verfahren gemäß einem der vorhergehenden Ansprüche durchzuführen.

9. Steuervorrichtung (36) für ein Kraftfahrzeug (29) gemäß Anspruch 8,
wobei die Steuervorrichtung (36) eine Motorsteuerung für den Verbrennungsmotor (30) sowie eine Steuerung zur Betätigung der Kupplung (32) umfasst.

10. Kraftfahrzeug (29) mit einem Verbrennungsmotor (30) mit einer Kurbelwelle und mit einem Antriebsstrang (33), der mittels einer lösbaren Kupplung (32) vom Verbrennungsmotor (30) getrennt werden kann, sowie mit einer Steuervorrichtung (36) gemäß Anspruch 8 oder 9.

## Claims

1. Method for operating a motor vehicle (29)
having at least one internal combustion engine (30) with a crankshaft, and having a drivetrain (33) which can be separated from the internal combustion engine (30) by means of a releasable clutch (32),
wherein the vehicle (29) is moved in a first possible operating state in a predetermined range around a speed (v) while the internal combustion engine (30) is off and is separated from the drivetrain (33) by the releasable clutch (32);
**characterized**
**in that**, in the case of a braking operation in this first operating state, a prediction is made as to whether a power demand is to be expected within a predetermined time interval and, if so, the crankshaft of the internal combustion engine (30) is set in rotation, or a rotational speed of the crankshaft is increased, in preparation for an engine restart.

2. Method for operating a motor vehicle (29) according to Claim 1, wherein the prediction as to whether a power demand is to be expected within a predetermined time interval is made on the basis of present state data of the drivetrain (33) and/or driver inputs and/or information items from vehicle sensors and/or route information items.

3. Method for operating a motor vehicle (29) according to any of the preceding claims, wherein the prediction as to whether a power demand is to be expected within a predetermined time interval is negative if at least one predetermined exclusion criterion is present.

4. Method for operating a motor vehicle (29) according to any of the preceding claims, wherein, within the predetermined time interval, a power demand is to be expected if a probability, determined on the basis of present state data of the drivetrain (33) and/or information items relating to driver inputs and/or information items from a vehicle sensor arrangement and/or route information items, of a power demand within the predetermined time interval exceeds a predetermined probability threshold.

5. Method for operating a motor vehicle (29) according to any of the preceding claims,
wherein the clutch (32) is a friction clutch, and the crankshaft of the internal combustion engine (30) is set in rotation or its rotation speed is increased by virtue of the clutch (32) being at least partially closed in order to transmit a torque from the shaft to the crankshaft by means of friction.

6. Method for operating a motor vehicle (29) according to any of Claims 1 to 4,
wherein the crankshaft of the internal combustion engine (30) is set in rotation, or its rotational speed is increased, by means of an electric motor.

7. Method for operating a motor vehicle (29) according to any of the preceding claims, wherein the electric motor is separable from the drivetrain (33) by means of at least one releasable clutch (32).

8. Control device (36) for a motor vehicle (29), wherein the control device (36) has a processor device which is configured to carry out a method according to any of the preceding claims.

9. Control device (36) for a motor vehicle (29) according to Claim 8, wherein the control device (36) comprises an engine controller for the internal combustion engine (30) and a controller for actuating the clutch (32).

10. Motor vehicle (29) having an internal combustion engine (30) with a crankshaft and having a drivetrain (33) which can be separated from the internal combustion engine (30) by means of a releasable clutch (32), and having a control device (36) according to Claim 8 or 9.

## Revendications

1. Procédé permettant de faire fonctionner un véhicule automobile (29) comprenant au moins un moteur à combustion interne (30) muni d'un vilebrequin, ainsi qu'une chaîne cinématique (33) pouvant être séparée du moteur à combustion interne (30) au moyen d'un embrayage débrayable (32),
dans lequel le véhicule (29) se déplace, dans un premier mode de fonctionnement possible, dans une zone prédéfinie à une vitesse (v) pendant que le moteur à combustion interne (30) est arrêté et séparé de la chaîne cinématique (33) par l'embrayage débrayable (32) ;
**caractérisé en ce que** dans le cas d'une opération de freinage dans ce premier état de fonctionnement, un pronostic est effectué pour savoir si une demande de puissance est à attendre dans un intervalle de temps prédéfini, et si c'est le cas, en préparation d'un redémarrage du moteur, le vilebrequin du moteur à combustion interne (30) est mis en rotation ou une vitesse de rotation du vilebrequin est augmentée.

2. Procédé permettant de faire fonctionner un véhicule automobile (29) selon la revendication 1, dans lequel le pronostic si une demande de puissance est à attendre dans un intervalle de temps prédéfini est effectué sur la base de données d'état instantanées de la chaîne cinématique (33) et/ou d'entrées du conducteur et/ou d'informations de capteurs de véhicule et/ou d'informations sur l'itinéraire.

3. Procédé permettant de faire fonctionner un véhicule automobile (29) selon l'une quelconque des revendications précédentes, dans lequel le pronostic si une demande de puissance est à attendre dans un intervalle de temps prédéfini est négatif si au moins un critère d'exclusion prédéfini est donné.

4. Procédé permettant de faire fonctionner un véhicule automobile (29) selon l'une quelconque des revendications précédentes, dans lequel une demande de puissance est à attendre dans l'intervalle de temps prédéfini si une probabilité d'une demande de puissance dans l'intervalle de temps prédéfini, déterminée sur la base de données d'état instantanées de la chaîne cinématique (33) et/ou d'informations concernant des entrées du conducteur et/ou d'informations d'un système de capteurs du véhicule et/ou d'informations sur l'itinéraire, dépasse une valeur seuil de probabilité prédéfinie.

5. Procédé permettant de faire fonctionner un véhicule automobile (29) selon l'une quelconque des revendications précédentes, dans lequel l'embrayage (32) est un embrayage à friction, et le vilebrequin du moteur à combustion interne (30) est mis en rotation ou sa vitesse de rotation est augmentée en ce que l'embrayage (32) est au moins partiellement fermé pour transmettre par friction un couple de l'arbre au vilebrequin.

6. Procédé permettant de faire fonctionner un véhicule automobile (29) selon l'une quelconque des revendications 1 à 4, dans lequel le vilebrequin du moteur à combustion interne (30) est mis en rotation ou sa vitesse de rotation est augmentée à l'aide d'un moteur électrique.

7. Procédé permettant de faire fonctionner un véhicule automobile (29) selon l'une quelconque des revendications précédentes, dans lequel le moteur électrique peut être séparé de la chaîne cinématique (33) par au moins un embrayage débrayable (32).

8. Dispositif de commande (36) pour un véhicule automobile (29), dans lequel le dispositif de commande (36) présente un dispositif processeur qui est conçu pour effectuer un procédé selon l'une quelconque des revendications précédentes.

9. Dispositif de commande (36) pour un véhicule automobile (29) selon la revendication 8, dans lequel le dispositif de commande (36) comprend une commande de moteur pour le moteur à combustion interne (30) ainsi qu'une commande pour actionner l'embrayage (32).

10. Véhicule automobile (29) comprenant un moteur à combustion interne (30) muni d'un vilebrequin et une chaîne cinématique (33) qui peut être séparée du moteur à combustion interne (30) au moyen d'un embrayage débrayable (32), ainsi qu'un dispositif de commande (36) selon la revendication 8 ou 9.
